# EUROPEAN PATENT APPLICATION

(11) **EP 0 736 670 A2**
(43) Date of publication of application: **09.10.1996**
(21) Application number: 96105477.2
(22) Date of filing: 04.04.1996
(51) Int. Cl.: F01L 3/22, F01L 1/26, F02F 1/42

(54) **Multiple valve internal combustion engine**

(30) Priority: 04.04.1995 JP 79007/95
(71) Applicant: YAMAHA HATSUDOKI KABUSHIKI KAISHA, Iwata-shi Shizuoka-ken, 438 (JP)
(72) Inventor: Tsuchida, Naoki, Iwata-shi, Shizuoka-ken (JP)
(74) Representative: Grünecker, Kinkeldey, Stockmair & Schwanhäusser Anwaltssozietät

(57) **Abstract**

An internal combustion engine has at least one cylinder defining a combustion chamber with a cylinder head unit comprising intake and exhaust passages leading to respective valve openings opening into a combustion chamber. At least one of said valve openings is provided with a valve seat having a seating surface. The valve openings are operable by respective valves having valve stems, said valves being reciprocable along a valve stem axis. A point of intersection of a center line of the respective intake or exhaust passage, the opening of which having said at least one valve seat, with the valve stem axis of the associated valve is located on or in the proximity of a plane which is surrounded by the seating surface of said valve seat.

## Description

This invention relates to an internal combustion engine having at least one cylinder defining a combustion chamber with a cylinder head unit comprising intake and exhaust passages leading to respective valve openings opening into a combustion chamber at least one of said valve openings being provided with a valve seat having a seating surface, said valve openings are operable by respective valves having valve stems, said valves being reciprocable along a valve stem axis and to a method for producing a valve seat within a cylinder head unit of an internal combustion engine.

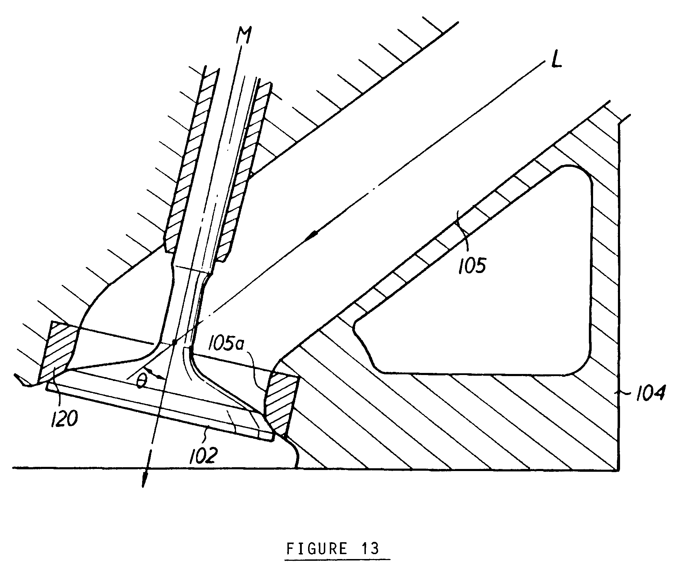

In four-cycle engines, for example, the required gas exchange is performed by air intake and exhaust valves opening and closing at the required timing over the air intake and exhaust openings into the combustion chamber. Normally valve seats which intermittently seat the air intake and exhaust valves are assembled by pressing them in place around the circumferences of the air intake and exhaust valve port openings in the cylinder head. For example, as shown in Figure 13, the valve seat 120 which has been press-fitted around the circumference of the air intake port 105 of the cylinder head 104 is where the air intake valve 103 will be intermittently seated.

It is known that in internal combustion engines an effective way to improve the combustion of the air/fuel mixture in the combustion chamber (especially in improving the lean limits) is to make the inflow of the mixture into the cylinder more active (called "tumbling" in high output engines).

It is however generally the case that when generating active tumbling, there is a strong tendency for the flow volume coefficient of the air intake port to decrease, and this is especially disadvantageous in high output engines.

Furthermore, it is known that an effective way to prevent the flow volume coefficient of the air intake port from declining when enhancing the tumbling action is to shorten the throat segment of the air intake port.

Further , in internal combustion engines of the prior art which employ press-fitted valve seats 120 such as shown in Figure 13, it is necessary to have a throat segment 105a of the required length to accommodate the press fitting of the valve seat 120 and this feature makes it difficult to implement the above described improvement. In other words, as is shown in Figure 13, since the throat segment 105a bends, the air/fuel mixture flow bends at an angle θ around to the center line M (the direction of the arrow) inside the air intake port 105, causing increased flow resistance to said air/fuel mixture, which results in the lowering of the flow volume coefficient of the air intake port 105. In Figure 13, M represents the axial line of the air intake valve 102.

Accordingly, it is an objective of the present invention to provide an improved internal combustion engine as indicated above which is capable to always enhance the tumbling action of the air/fuel mixture and simultaneously to ensure a high flow volume coefficient especially in high output engines.

According to the invention, this objective is solved for an internal combustion engine as indicated above in that a point of intersection of a center line of the respective intake or exhaust passage, the opening of which having said at least one valve seat, with the valve stem axis of the associated valve is located on or in the proximity of a plane which is surrounded by the seating surface of said valve seat.

In order to facilitate the use of as thin as possible valve seats, it is advantageous when said valve seats are bonded to the cylinder head unit by metallurgical bonding, injection molding, laser welding or explosion welding.

In case the internal combustion engine has three intake valves comprising one center valve and two side valves arranged at both sides of said center valve, it is advantageous when at least said center valve being provided with a valve seat is bonded to said cylinder head unit.

It is possible to further enhance the tumbling action of the air fuel mixture when a first distance of an opening for a spark plug to the air intake valves is larger than a second distance of said opening to the exhaust valves.

In this case, it is advantageous when the largest height of the combustion chamber is close to the opening of the spark plug.

According to another embodiment of the invention, a water jacket is formed within said cylinder head unit surrounding the at least one combustion chamber, whereby it is advantageous to enhance the volume of said water jacket for better cooling of said cylinder head unit and in order to have no loss of strength of said cylinder head unit to provide within the water jacket adjacent the three air intake valves a rib for reinforcing said cylinder head unit.

In case of a five-valve engine having three intake and two exhaust valves, it is advantageous when a tilt angle of the center air intake valve is less than the tilt angles of the side air intake valves and when the respective valve stem axes of the air intake valves diverge outwardly in an upward direction away from said combustion chamber.

The longevity of this cylinder head unit or the engine, respectively, may be further enhanced by providing all of said intake and exhaust valves with a bonded valve seat.

It is a further objective of the present invention to provide a method for producing a valve seat within a cylinder head unit of an internal combustion engine which facilitates the use of small valve seats and simultaneously ensures an enhanced tumbling action of the air/fuel mixture with a sufficient flow volume coefficient.

According to the invention, this objective is solved by a method for producing a valve seat within a cylinder head unit of an internal combustion engine, said cylinder head comprising intake and exhaust passages leading to respective valve openings opening into a combustion chamber, at least one of said valve openings being provided with a valve seat having a seating surface, said valve openings are operable by respective valves having valve stems, said valves being reciprocable along a valve stem axis, wherein a point of intersection of a enter line of the respective intake or exhaust passage, the opening of which having said at least one valve seat, with the valve stem axis of the associated valve is located on or in the proximity of a plane which is surrounded by the seating surface of said valve seat, comprising the steps of: (a) placing a valve seat insert onto the surface of an opening within said cylinder head unit, (b) pressing said valve seat insert against said cylinder head unit and then additionally impressing a voltage between the abutting surfaces of said valve seat insert and said cylinder head unit, so that said valve seat insert and said cylinder head unit are metallurgically bonded with each other, and (c) applying a finishing treatment to said bonded pieces to receive the desired valve seat.

According to the invention, the valve seat insert forms an eutectic alloy with a cylinder head unit by a so-called solid state diffusion. Although this solid state diffusion might take place between the material of the valve seat and the material of the cylinder head without metal deposits, it is possible to further enhance the bonding strength when prior to step (a) the valve seat insert is provided with metal deposits for also forming an eutectic alloy between the metal deposits and the material of the cylinder head unit.

According to another embodiment of the invention, the valve seat insert is provided with a film coating of said metal deposits which may have a coating with a thickness of 0.1 µm - 30 µm.

Other preferred embodiments of the present invention are laid down in further dependent claims.

According to an embodiment of the invention , the throat segment of the air intake port has been eliminated to enable the port to be approximately linearly shaped and directed toward the combustion chamber, thereby minimizing the flow resistance to the air/fuel mixture to prevent any decrease in the air intake port's flow volume coefficient, thereby increasing the combustion efficiency of the air/fuel mixture by means of the enhancement of tumbling, which in turn improves the output of said internal combustion engine.

According to another embodiment of the invention , at least the air intake valves' valve seats are bonded valve seats, and because these bonded valve seats do not need to be of a size withstanding press-fitting, it is possible to easily eliminate the throat segment of the air intake ports, thereby realizing a specific structure for accomplishing the above embodiment.

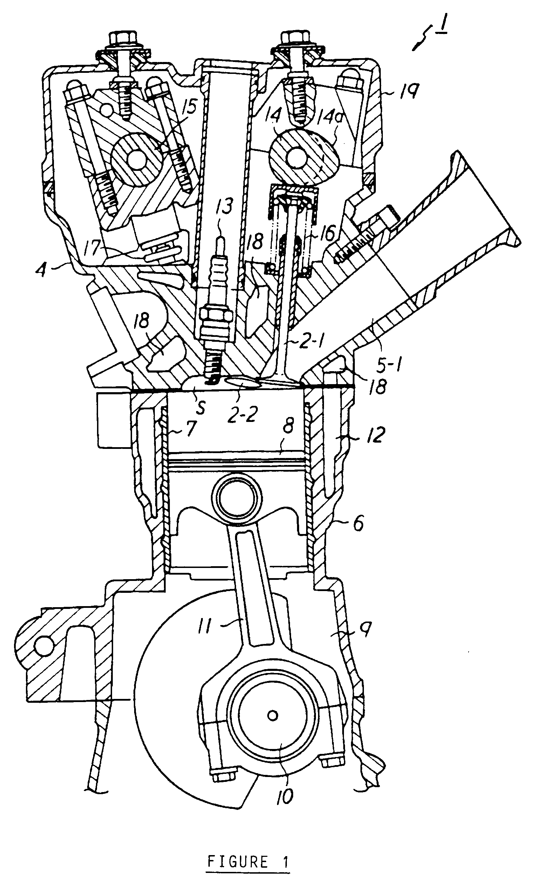

According to a further embodiment of the invention, since the tilt angle of the center valve in the so-called 5-valve engine is comparatively smaller, there is no tendency for the air/fuel mixture flowing through it to form a reverse tumble that would cancel the forward tumble (see Figure 1, the tumble in the counter-clockwise direction), thereby further contributing to the enhancement of the tumbling action, which improves the combustion efficiency of the air/fuel mixture.

According to a still further embodiment of the invention, since the spark plug is located in close proximity to the exhaust valves, the end gas comes toward the comparatively lower temperature air intake valve area, which helps to prevent knocking. Also, since the spark plug is located more distantly from the air intake valves, the enhanced tumbling makes for better fuel mixing.

According to still another embodiment of the invention, a rib is incorporated to compensate for any loss of strength in the cylinder head deck surface that might derive from the thinner stock between the air intake port and the mating surface of the cylinder head that results from eliminating the throat segment of the air intake ports.

According to another embodiment of the invention all the air intake ports have been formed to be approximately linear in shape, thereby minimizing any flow loss in the air/fuel flow in the air intake port, preventing the lowering of the flow volume coefficient in the ports, and allowing feeding the required air/fuel mixture to the inside of the cylinders.

In the following, the present invention is explained in greater detail with respect to several embodiments thereof in conjunction with the accompanying drawings, wherein:
Figure 1 is a vertical sectional view of a four-cycle stroke engine according to this invention;
Figure 2 is an enlarged detailed sectional view of the air intake valve and air intake port areas of the four-cycle stroke engine according to this invention;
Figure 3 is a diagrammatic top view showing the layout of the air intake and exhaust valves of the four-cycle stroke engine according to this invention;
Figure 4 is a diagrammatic front sectional view showing the relationship between the layout of the air intake valves and the shape of the air intake port of the four-cycle stroke engine according to this invention;
Figure 5 is a cut-away sectional view illustrating the bonding process for the bonded valve seats;
Figure 6 is a cut-away sectional view illustrating the bonding process for the bonded valve seats;
Figure 7 is a cut-away sectional view illustrating the bonding process for the bonded valve seats;
Figure 8 is a cut-away sectional view illustrating the bonding process for the bonded valve seats;
Figure 9 is a cut-away sectional view illustrating the bonding process for the bonded valve seats;
Figure 10 is a cut-away sectional view illustrating the bonding process for the bonded valve seats;
Figure 11 is a detailed enlargement of the area A of figure 6;
Figure 12 is a detailed enlargement of the area B of Figure 7,
Figure 13 is an enlarged, detailed sectional view of the air intake valve and air intake port area of a conventional four-cycle stroke engine;
Figure 14 is a diagrammatic front sectional view showing the relationship between the layout of the air intake valves and the shape of the air intake ports on a conventional four-cycle stroke engine; and
Figure 15 is a diagrammatic top view showing the positioning of the air intake and exhaust valves on a conventional four-cycle stroke engine.

An example of the present invention will be described below based upon the attached figures.

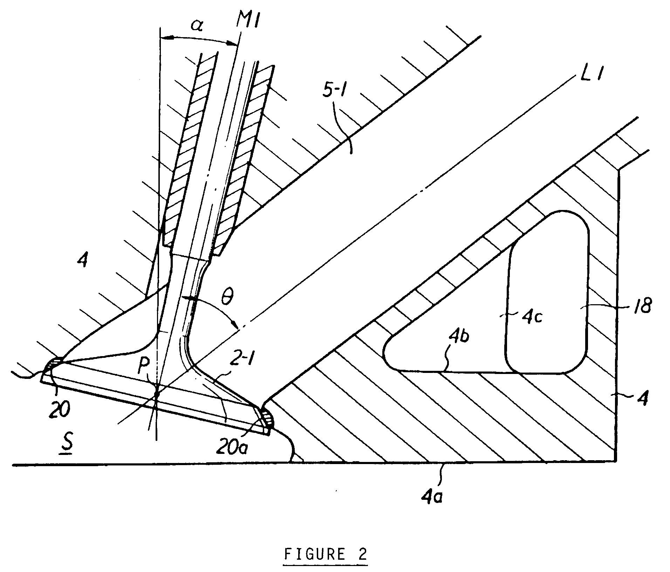

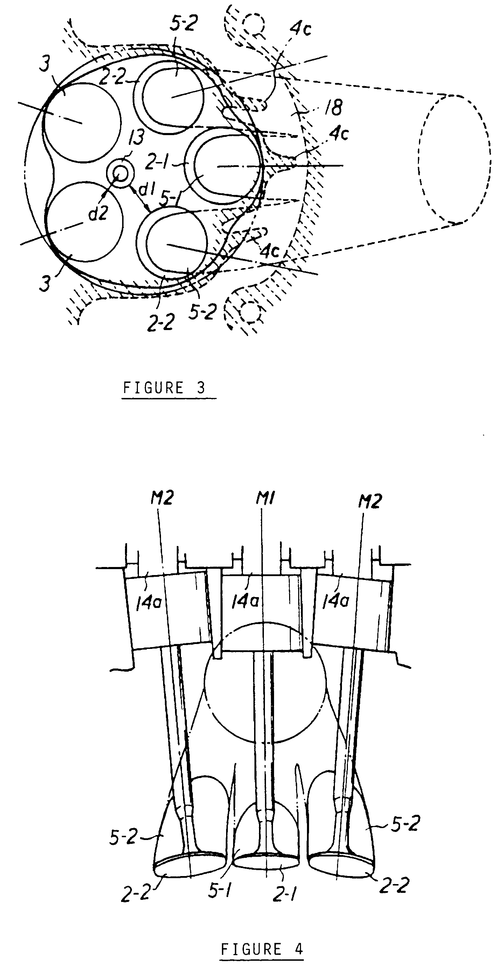

Figure 1 is a vertical sectional view of a four-cycle stroke engine according to this invention; Figure 2 is an enlarged detailed sectional view of the air intake valves and the air intake ports of the same four-cycle engine; Figure 3 is a diagrammatic top view showing the layout of the air intake and exhaust valves of the same four-cycle engine; and Figure 4 is a diagrammatic front sectional view showing the relationship between the layout of the air intake valves and the shape of the air intake ports.

The four-cycle stroke engine 1 in this embodiment is a 5-valve engine wherein, for each cylinder, there are three air intake valves 2-1, 2-2 (2-1 is the center air intake valve (center valve) and 2-2 represents the air intake valves on either sides) and two exhaust valves 3 (see Figure 3). There are three air intake ports 5-1, 5-2 formed in a cylinder head 4 (5-1 is the center air intake port, and 5-2 represents the two side air intake ports), and two exhaust ports which are not shown in the Figures. These ports comprise respective air intake valves 2-1, 2-1 and exhaust valves 3 which are opened and closed at the appropriate timing to perform the required gas exchange.

As is shown in Figure 1, pistons 8 are inserted in the various cylinders 7 that were formed in the cylinder body 6 of the four-cycle engine 1, and said pistons are connected by means of connecting rods 11 to a long crankshaft 10 which extends in a direction perpendicular to the plane of the paper and which is housed inside the crankcase 9. Also a water jacket 12 is formed in the cylinder body 6 to circulate coolant water around the cylinders 7.

The cylinder head 4 is further attached on top of the foregoing cylinder body 6, and depressions comprising the combustion chambers S are formed into said cylinder head 4. There are also spark plugs 13 with electrodes bordering the combustion chambers S, which are located closer to the exhaust side of the cylinder and which extend upward at an angle that tilts toward the air intake side.

As previously explained, three air intake ports 5-1, 5-2 and two exhaust ports (not shown) are formed in the cylinder head for each cylinder, and these are opened and closed by air intake valves 2-1, 2-2 and by exhaust valves 3, respectively. The air intake valves 2-1, 2-2 and exhaust valves 3 are held in the normally closed position by means of valve springs 16, 17, and cams 14a formed on camshafts 14, 15 drive the valves (the cams formed on the exhaust side camshaft 15 are not shown in the figure). The rotation of the crankshaft 10 drives the camshafts 14, 15 at the appropriate speed. A water jacket 18 is formed in the cylinder head 4 which connects to the above mentioned water jacket 12 in the cylinder body. The cylinder head 4 is also covered by a cylinder head cover 19.

In the engine 1 of this example, notches are formed around the openings for the air intake ports 5-1, 5-2 and exhaust ports on the combustion chamber side, and these notches are to hold annular valve seats. These valve seats are bonded valve seats 20, which are bonded in place in the cylinder head 4 using the resistance heating method.

Presently the bonded valve seats 20 will be explained.

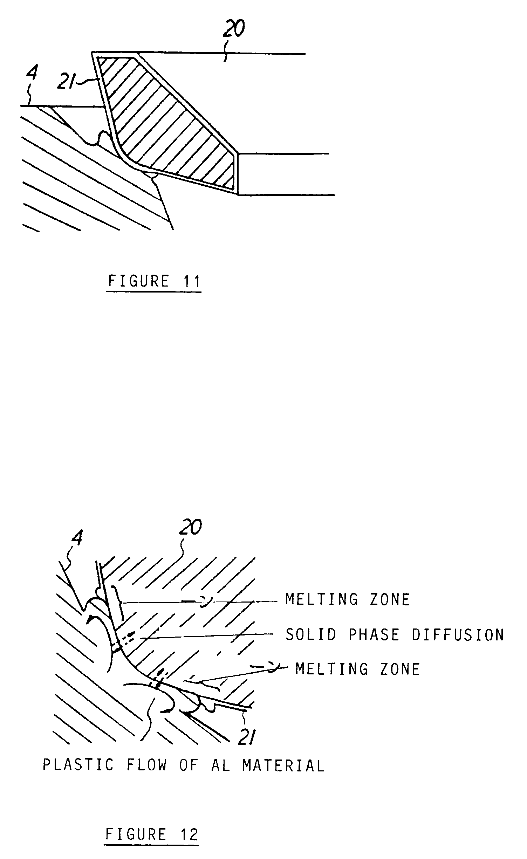

These bonded valve seats 20 are formed into rings made from an Fe sintering material with excellent impact strength, wear resistance, and high temperature strength; moroever a film 21 (see Figure 11) is formed on the surface of the mother stock to a thickness of 0.1 to 30 µm, and then resistance heating is used to attach the valve seats to the cylinder head 4. The pores in the Fe sintered stock, which is the stock material for said bonded valve seats 20, are filled by immersing them in a molten metal such as Cu which offers a high heat conductivity and self-lubricating properties.

The material used to form the foregoing film should be a co-crystallization alloy metal with a melting point lower than that of the element or main component element of the Al alloy used as the stock material for the cylinder head. In the present embodiment, Cu was used as that material. The present embodiment used electroplating to form the Cu film 21, but it would be equally possible to use non-electrical plating methods or injection molding to form the plating layer.

While the melting points of Al and Cu alone are 660°C and 1083°C, respectively, the melting point of the Al-Cu alloy at the co-crystallization point is 548°C, lower than the melting points for Al and Cu alone (660°C and 1083°C). Accordingly, it is possible to form an Al-Cu co-crystal with a melting point lower than those of Al and Cu.

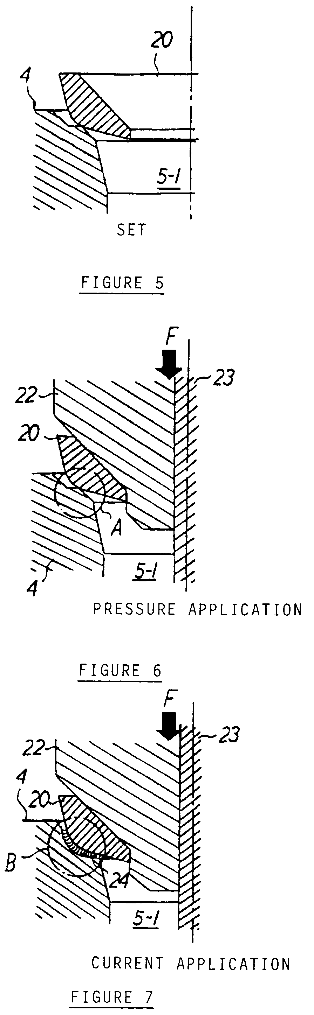

Next, the bonding process for the bonded valve seats 20 will be explained with references to Figures 5 through 12. Figures 5 through 10 are cutaway sectional drawings to explain the bonding process for the bonded valve seats; Figure 11 shows details in an enlargement of the A area of Figure 6; and Figure 12 shows the details in an enlargement of the B area of Figure 7.

First, as shown in Figure 5, the protruding area on the outside circumference of the bonded valve seat is placed against the protruding area around the perimeter of the intake port 5-1 on the cylinder head 4. Then the guide bar 23 guiding the top electrode 22 is inserted into the valve guide insertion hole previously formed in the cylinder head 4.

Next, as shown in Figure 6, the top electrode 21 of the resistance welding machine moving up and down along the guide bar 23 is fitted into the inside circumferential tapered surface 20b of the valve seat 20, thereby forcing the valve seat 20 into the cylinder head 4 by a force F applied by the top electrode 22. At this time both the Al alloy of the cylinder head 4 stock and the Cu in the film 21 are in contact under pressure, but remain in the solid phase. Figure 11 shows the contact between the valve seat 20 and the cylinder head 4 at this time.

Then, as shown in Figure 6, power is supplied through the top electrode 22 to the valve seat 20 while pressure is also applied (see Figure 7), so that the current flows from the valve seat 20 to the cylinder head 4. This current heats both components in the area of the junction and in the immediate vicinity. As a result of a temperature rise which causes active atomic movement, there is a mutual diffusion of the Cu and Al atoms from the two materials at the junction area which creates a solid phase diffusion layer containing Cu-Al allow between the film 21 on the valve seat 20 and the cylinder head 4.

When an adequate heating temperature has been created to allow a liquid phase of Cu-Al alloy to develop, the Cu-Al alloy at the junction between the valve seat 20 and the cylinder head 4 melts, and then, as more time passes, direct bonding of the Fe sintered material of the valve seat 20 to the cylinder head 4 materializes as shown in Figure 12. At this time, the following occurs simultaneously:

Plastic flows are generated in the direction of the arrows in Figure 12 at the junction interface between the Al alloy of the cylinder head 4 and the valve seat 20. Not only is the liquid phase generated by the above described reaction expelled outward, but there is also solid phase diffusion between the Fe atoms and Al atoms at the contact interface whereby the valve seat 20 becomes strongly bonded to the circumferential edge of the air intake port 5-1 of the cylinder head.

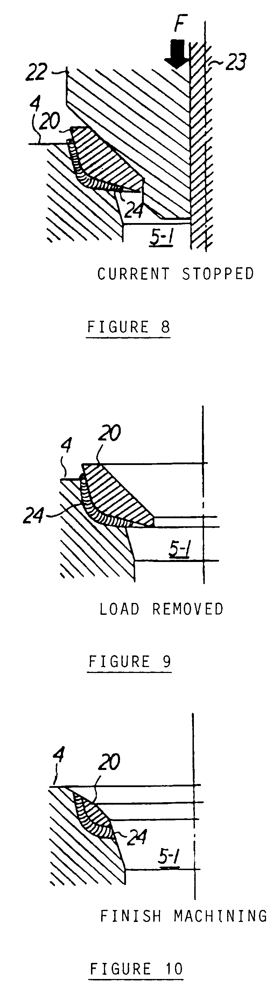

Through the above described mechanism, the valve seat 20 becomes strongly attached to the cylinder head 4, whereupon the current is cut off. When this happens, as shown in Figure 8, an Al plastic deformation layer 24 is formed at the junction interface of the cylinder head 4 with the valve seat 20, and at the ends of the interface, there are solidified areas from where the liquid phase was extruded.

Next, as shown in Figure 9, the top electrode 22 is withdrawn to relieve the pressure on the valve seat 20, and then finally, as shown in Figure 10, the valve seat 20 is machined to the desired shape and finished to complete the joining operation of the valve seat 20 to the cylinder head. The result is that the valve seat 20 is strongly attached and integrated around the circumference of the opening of the air intake port 5-1.

The foregoing process was described only for the valve seats 20 on the air intake side, however, the same process may be used to strongly attach the exhaust side valve seats (not shown) to the cylinder head 4.

The thickness of the bonded valve seats 20 that were attached in the manner described above is very slight (normally about 500 µm), and since their width and height dimensions are also very small, compared to the pressed-in valve seats used in conventional cylinder heads, it is not necessary to make them of sufficient size for pressing, and accordingly, as shown in Figure 2, it is not necessary to form a throat segment in the air intake port 5-1, and, as shown in Figure 2, said air intake port 5-1 can be made to be approximately linear. As a result, the point of intersection P between the center line L1 of the air intake port 5-1 and the valve stem axis M1 of the air intake valve 2-1 can be made to lie in close proximity to the seating surface 20a of the valve seat, or downstream thereof (with respect to the direction of flow of the air/fuel mixture).

Therefore, said point of intersection P is located on or in the proximity of a plane which is surrounded by said seating surface 20a of said valve seat 20. This plane may be any plane definable by said seating surface lying within a disk-shaped volume defined by said seating surface 20a.

In addition, the tilt angle α of the center air intake valve in the four-cycle engine 1 of this invention is less than the tilt angle of the other air intake valves 2-2 on each side, and as is shown in Figure 4, the axial lines or valve stem axes M1, M2 of the air intake valves 2-1, 2-2 diverge outwardly in the upward direction (the direction moving away from the combustion chamber S).

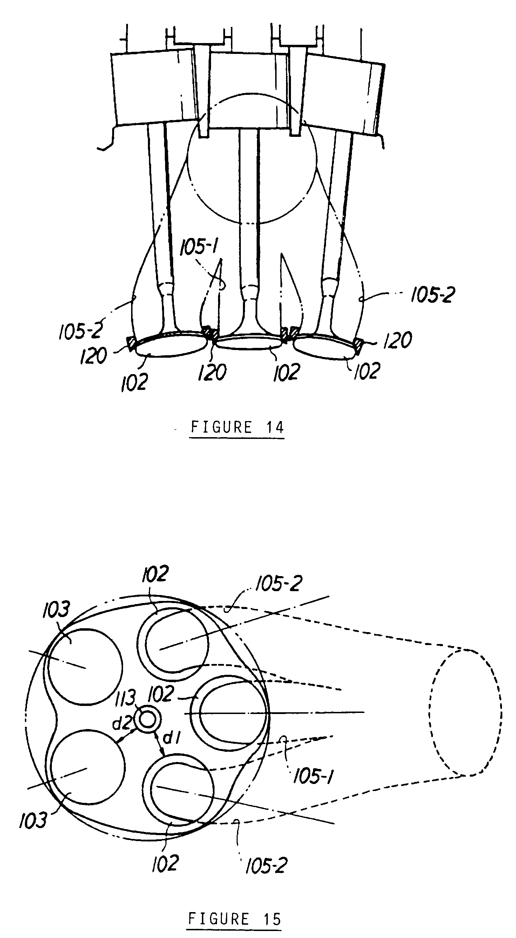

However, with conventional four-cycle stroke engines in which the valve seats 120 are press-fitted around the air intake port openings 105-1, 105-2 as shown in Figure 14, the various circumferential areas around the openings for the air intake valves 105-1, 105-2 require a throat segment to accommodate the press-fitted valve seats 120, and, consequently, each of the air intake ports 105-1, 105-2 requires a curved shape. The result is increased flow resistance to the air/fuel mixture flowing through the air intake ports 105-1, 105-2, and lowering of their flow volume coefficients.

Because, in the invention, the bonded valve seats 20 are attached around the circumferences of the air intake port openings 5-1, 5-2 using a bonding method, it is possible to shape the various air intake ports 5-1, 5-2 approximately linearly and directed toward the combustion chamber S, as shown in Figure 4. The result is that even when the tilt angle (for example, the angle θ between the center line L1 of the air intake port 5-1 and the axial line M1 of the air intake valve 2-1) of the various air intake ports 5-1, 5-2 is increased to promote more active tumbling of the air/fuel mixture inside the cylinder, the direction of flow of the air/fuel mixture from each of the air intake ports 5-1, 5-2 does not have to be changed substantially, and thus the mixture flows smoothly into the cylinder. By decreasing the flow resistance on the air/fuel mixture, it is possible to prevent the flow volume coefficient in the various air intake ports 5-1, 5-2 from decreasing.

As described above, according to this embodiment, not only is it possible to minimize the flow resistance of the air/fuel mixture to prevent any decrease in the flow volume coefficient of the air intake ports 5-1, 5-2, but the tumbling action of the mixture inside of the cylinder 7 is promoted to increase combustion efficiency, thereby providing said four-cycle engine 1 with improved output. In particular, with regard to the air/fuel mixture flowing through the center air intake valve 3-1 at a smaller tilt angle α, the tendency to tumble in the opposite direction and cancel the regular tumble has been eliminated, so that the air/fuel mixture flowing through the center air intake valve 2-1 also contributes to a more active tumbling action, thereby further increasing the combustion efficiency of the air/fuel mixture.

Figure 15 is a diagrammatic top view showing the positional relationship between the air intake valves 102, the exhaust valves 103 and the spark plug 113 in a conventional 5-valve engine. Due to heat-related issues, the conventional layout selects the distance d1 between the spark plug 113 and the air intake valves to be shorter than the distance d2 between the spark plug 113 and the exhaust valves 103, i.e. d1 < d2.

However, if the opposite from the above (d1 < d2) relationship (in other words d1 > d2) is selected so that the spark plug 113 lies in closer proximity to the exhaust valves 103, the end gas arrives in the vicinity of the relatively lower temperature air intake valves, thereby effectively preventing knocking. Further, when there is a strong tumbling action, such as described above, then placing the spark plug 113 farther away from the air intake valve 102 is known to be advantageous from the perspective of improved fuel mixing.

Accordingly, because the present embodiment utilizes a bonded valve seat, there is no need to consider tensile stress generated at the valve seat during high temperature operations, and, as shown in Figure 3, by making the distance d2 between the spark plug 13 and the exhaust valves 3 shorter than the distance d1 between the spark plug 13 and the air intake valves 2-1, 2-2 (d2 < d1), it is possible to position the spark plug 13 closer to the exhaust side (or more distantly from the air intake valves 2-1, 2-2), thereby preventing knocking and improving fuel mixing. Further, since lower temperatures might be anticipated for the air intake valves 2-1, 2-2 that use a bonded valve seat, the placement of the spark plug 13 closer to the side where the exhaust valves 3 are present becomes even more effective. In this case, since it is necessary to install and remove the spark plugs 13 from the space between the camshafts 14, 15, the spark plugs 13 have been installed at an angle whereby their tops will tilt, as described above, toward the air intake side (see Figure 1).

As is shown in Figure 2, when the bonded valve seat 20 is used and the throat segment of the air intake port 5-1 is eliminated, the stock thickness between the air intake port 5-1 of the cylinder head 4 and the mating surface (the mating surface with the cylinder body) becomes thinner, and this feature tends to lead to inadequate strength of the cylinder head deck surface.

To address this difficulty, as shown in Figures 2 and 3, this embodiment of the invention employs a rib 4c that connects to the cylinder head deck surface 4b formed on the water jacket 18 side of the cylinder head 4 in the vicinity of the air intake ports 5-1, 5-2. The strength of the cylinder head deck surface 4b is enhanced by this rib 4c, and the rib also contributes to prevent gas from escaping at the mating surface between the cylinder head 4 and the cylinder body 6.

In the present embodiment, bonded valve seats were attached around the openings for the air intake ports 5-1, 5-2 and the exhaust ports, but it is further possible to use the bonded valve seats only for the openings of the air intake port 5-1, 5-2, or even only for the opening of the center air intake port.

Further, bonded valve seats are installed around the circumference of the openings, for the air intake ports 5-1, 5-2 and exhaust ports in this embodiment, and any method, other than press fitting, which allows thin valve seats to be formed around these openings, may be employed. Such additional methods include injection molding, laser welding, explosion welding, etc.

Further, the invention was described in terms of its application to a four-cycle engine, but it is of course possible to apply it with equal ease to two-cycle engines comprising air intake and exhaust valves.

As is apparent from the foregoing explanation, according to one embodiment, it is possible to shape the air intake ports approximately linearly into the combustion chamber in the absence of a throat segment, thereby reducing the flow resistance of the air/fuel mixture and preventing the flow volume coefficient of the air intake port from declining, and in addition, it increases the combustion efficiency by promoting more active tumbling, thereby improving the output of said internal combustion engine.

A further embodiment employs bonded valve seats for at least the air intake valves, thereby allowing smaller valve seats than possible when conventional, press-fitted valve seats are employed; by so doing, it is possible to eliminate the throat segment of the air intake ports.

Another embodiment further promotes active tumbling by providing a tilt angle in the 5-valve engine for the center valve which does not generate a tumble opposing that of the other intake air flows, thereby improving the combustion efficiency of the air/fuel mixture.

In a still further embodiment, the spark plug is located closer to the exhaust valves so that the end gas or air/fuel mixture arrives in the vicinity of the relatively lower temperatured air intake valves and effectively prevents knocking. Further, since the spark plug is positioned farther away from the air intake valves, advantageous fuel mixing will occur when there is strengthened tumbling.

According to another embodiment, a rib is formed in the thin-walled area caused by the elimination of the throat segments, between the air intake port and the mating surface of the cylinder head to provide adequate strength for the cylinder head deck surface.

A further embodiment provides an approximate linear shape for the air intake ports to decrease the flow loss of the air/fuel mixture in the air intake ports, and to prevent the flow volume coefficient of the air intake ports from declining. This feature is effective in providing the required volume of air/fuel mixture to the inside of the cylinders.

## Claims

1. Internal combustion engine having at least one cylinder defining a combustion chamber with a cylinder head unit comprising intake and exhaust passages leading to respective valve openings opening into a combustion chamber at least one of said valve openings being provided with a valve seat having a seating surface, said valve openings are operable by respective valves having valve stems, said valves being reciprocable along a valve stem axis **characterized in that** a point (P) of intersection of a center line (L1) of the respective intake or exhaust passage (5-1), the opening of which having said at least one valve seat (20), with the valve stem axis (M1) of the associated valve (2-1) is located on or in the proximity of a plane which is surrounded by the seating surface (20a) of said valve seat (20).

2. Internal combustion engine according to claim 1, **characterized in that** said point (P) of intersection is located on the combustion chamber side of said plane surrounded by said seating surface (20a).

3. Internal combustion engine according to claim 1 or 2, **characterized in that** said valve seat (20) is formed to said cylinder head unit (4) by a bonding method such as metallurgical bonding, injection molding, laser welding or explosion welding.

4. Internal combustion engine according to at least one of claims 1 to 3, **characterized by** three air intake valves comprising one center valve (2-1) and two side valves (2-2) arranged at both sides of said center valve (2-1) and by two exhaust valves (3), whereby at least one of said three air intake valves (2-1, 2-2) being provided with a valve seat (20) bonded to said cylinder head unit (4).

5. Internal combustion engine according to claim 4, **characterized in that** said center valve (2-1) being provided with said valve seat (20).

6. Internal combustion engine according to claim 4 or 5, **characterized in that** a first distance (d1) of an opening for a spark plug (13) to said air intake valves (2-1, 2-2) is larger than a second distance (d2) of said opening to said exhaust valves (3).

7. Internal combustion engine according to at least one of claims 4 to 6, **characterized in that** a water jacket (18) is formed within said cylinder head unit (4) surrounding said at least one combustion chamber (S) and that at least one rib (4c) is provided within said water jacket (18) adjacent said three air intake valves (2-1, 2-2) for reinforcing said cylinder head unit (4).

8. Internal combustion engine according to at least one of claims 4 to 7, **characterized in that** said respective air intake passages (5-1, 5-2) are substantially linearly shaped.

9. Internal combustion engine according to at least one of claims 4 to 8, **characterized in that** a tilt angle (α) of said center air intake valve (2-1) is less than the tilt angles of said side air intake valves (2-2) and that the respective valve stem axes (M1, M2) of said air intake valves (2-1, 2-2) diverge outwardly in an upward direction away from said combustion chamber (S).

10. Internal combustion engine according to at least one of claims 4 to 9, **characterized in that** all three air intake valves (2-1, 2-2) are provided with bonded valve seats (20).

11. Internal combustion engine according to claim 10, **characterized in that** all two exhaust valves (3) in addition are provided with bonded valve seats (20).

12. Internal combustion engine according to at least one of claims 1 to 11, **characterized in that** said valve seat (20) or said valves seats (20) are metallurgically bonded to said cylinder head unit (4) and that a plastic deformation layer (24) is formed on the bonding boundary at least one the cylinder head unit side.

13. Internal combustion engine according to claim 12, **characterized in that** said valve seat (20) or said valve seats (20) comprise metal deposits forming an eutectic alloy with the metal of said cylinder head unit (4).

14. Internal combustion engine according to claim 12 or 13, **characterized in that** said metal deposits are composed of Cu.

15. Internal combustion engine according to at least one of claims 12 to 14, **characterized in that** said valve seats (20) are made of an Fe-based alloy.

16. Internal combustion engine according to at least one of claims 6 to 15, **characterized in that** the largest height of said combustion chamber (S) is close to said opening of said spark plug (13).

17. Method for producing a valve seat within a cylinder head unit of an internal combustion engine, said cylinder head comprising intake and exhaust passages leading to respective valve openings opening into a combustion chamber, at least one of said valve openings being provided with a valve seat having a seating surface, said valve openings are operable by respective valves having valve stems, said valves being reciprocable along a valve stem axis, wherein a point (P) of intersection of a center line (L1) of the respective intake or exhaust passage (5-1), the opening of which having said at least one valve seat (20), with the valve stem axis (M1) of the associated valve (2-1) is located on or in the proximity of a plane which is surrounded by the seating surface (20a) of said valve seat (20), in particular according to at least one of the preceding claims 1 to 16, comprising the steps of:
(a) placing a valve seat insert onto the surface of an opening within said cylinder head unit,
(b) pressing said valve seat insert against said cylinder head unit and then additionally impressing a voltage between the abutting surfaces of said valve seat insert and said cylinder head unit, so that said valve seat insert and said cylinder head unit are metallurgically bonded with each other, and
(c) applying a finishing treatment to said bonded pieces to receive the desired valve seat.

18. Method according to claim 17, **characterized in that** during step (b) a plastic deformation layer (24) is formed on the bonding boundary at least on the cylinder head side.

19. Method according to claim 17 or 18, **characterized in that** prior to step (a) said valve seat insert is provided with metal deposits which are capable of forming an eutectic alloy with said cylinder head unit (4) during step (b).

20. Method according to claim 19, **characterized in that** said valve seat insert is provided with a film coating (21) of said metal deposits.

21. Method according to claim 20, **characterized in that** the thickness of said film coating (21) is 0.1 µm - 30 µm.

22. Method according to claim 20 or 21, **characterized in that** said film coating (21) is formed by electroplating, non-electrical plating or by injection moulding.

23. Method according to at least one of claims 19 to 22, **characterized in that** said metal deposits are composed of Cu.

24. Method according to at least one of claims 17 to 23, **characterized in that** said valve seat insert is made of an Fe-based sintered alloy.

25. Method according to at least one of claims 17 to 24, **characterized in that** said abutting surfaces of said valve seat insert and said cylinder head unit are convex surfaces.
